(19) **Europäisches Patentamt / European Patent Office / Office européen des brevets**

(11) **EP 3 293 504 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(51) Int Cl.:
**G01M 15/02** *(2006.01)*    **G01M 99/00** *(2011.01)*
**G05D 23/32** *(2006.01)*

(21) Anmeldenummer: **17190334.7**

(22) Anmeldetag: **11.09.2017**

(54) **VERFAHREN ZUR REGELUNG ODER STEUERUNG DER THERMISCHEN BEDINGUNGEN AN EINEM PRÜFSTAND**

METHOD FOR THE REGULATION OR CONTROL OF THE THERMAL CONDITIONS ON A TEST BENCH

PROCÉDÉ DE RÉGLAGE OU DE COMMANDE DES CONDITIONS THERMIQUES DANS UN BANC D'ESSAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2016   AT 501932016**
**12.05.2017   AT 504032017**

(43) Veröffentlichungstag der Anmeldung:
**14.03.2018   Patentblatt 2018/11**

(73) Patentinhaber: **IVD Prof. Hohenberg GmbH**
**8010 Graz (AT)**

(72) Erfinder: **HOHENBERG, Günter**
**8010 GRAZ (AT)**

(74) Vertreter: **Babeluk, Michael**
**Florianigasse 26/3**
**1080 Wien (AT)**

(56) Entgegenhaltungen:
**WO-A1-2004/063600     DE-A1-102013 100 099**
**JP-A- 2008 128 809     US-A1- 2009 266 525**

**Beschreibung**

Die Erfindung betrifft ein Verfahren zur Regelung oder Steuerung der thermischen Bedingungen an einem Prüfstand für zumindest ein Wärme- oder Kälte abgebendes Testobjekt, insbesondere zumindest einer beispielsweise als Brennkraftmaschine ausgebildeten Wärmekraftmaschine und/oder zumindest einer elektrischen Maschine, wobei zur Einhaltung einer vorgebbaren Solltemperatur oder eines vorgegebenen Verlaufes der Solltemperatur ein Wärmeträgermedium zwischen dem Testobjektes und einer Wärmesenke oder Wärmequelle geführt wird. Weiters betrifft die Erfindung eine Konditioniereinrichtung zur Durchführung des Verfahrens.

In Prüfzellen mit Prüfständen, beispielsweise Fahrzeugprüfstande, werden unter definierten Prüfbedingungen interessierende Messgrößen, wie beispielsweise der Emissionsausstoß eines Fahrzeuges, unter realen Betriebsbedingungen, insbesondere Fahrbedingungen (RDE=Real Driving Emissions) gemessen. Für die Messung muss meistens ein relativ enges Toleranzfenster für die Temperatur innerhalb der Prüfzelle und/oder des Testobjektes (UUT=Unit Under Test) eingehalten werden. Üblicherweise wird dabei der Innenraum der Prüfzelle durch eine vorhandene Klimatisiereinrichtung gekühlt, sobald die Temperatur innerhalb der Prüfzelle einen definierten Grenzwert überschreitet. Nachteilig ist, dass die Kühlung der Luft mit einer gewissen Zeitverzögerung erfolgt. Insbesondere für im realen Fahrbetrieb auftretende schnell veränderliche Vorgänge ist diese Art der Temperierungssteuerung zu langsam und zu träge.

Üblicherweise erfolgt dabei der für die Kühlung der Luft erforderliche Wärmeaustausch über einen eine kalorische Wärmesenke bildenden Wärmetauscher, wobei die Wärme über den Wärmedurchgang durch eine Wärmetauscherwand übertragen wird. Dieser Weg ist allerdings wegen der thermischen Trägheit des Wärmedurchganges der Wärmetauscherwand relativ langsam, was sich ebenfalls nachteilig auf die Dynamik der Steuerung bzw. Regelung auswirkt.

Es ist die Aufgabe der Erfindung die genannten Nachteile zu vermeiden und auf möglichst einfache Weise eine dynamische Steuerung bzw. Regelung der thermischen Bedingungen an einem Prüfstand für ein Testobjekt bzw. des Testobjektes zu ermöglichen.

Erfindungsgemäß erfolgt dies dadurch, dass die Wärmeentwicklung und/oder Temperatur des Testobjektes mittels eines virtuellen Wärmesensors momentan und/oder prädiktiv ermittelt wird und in Abhängigkeit der momentanen und/oder prädiktiven Wärmeentwicklung des Testobjektes die Wärmesenke oder eine Wärmequelle geregelt oder gesteuert wird.

Beim Testobjekt kann es sich beispielsweise um eine Wärmekraftmaschine - insbesondere eine Brennkraftmaschine eines Kraftfahrzeuges - oder eine elektrische Maschine, oder eine Kombination aus Wärmekraftmaschinen und elektrische Maschinen eines Hybridantriebssystems handeln.

Virtuelle Sensoren sind nicht körperlich existent, sondern sind in Software realisiert. Sie "messen" (berechnen) Werte, welche aus den Messwerten realer Sensoren mit Hilfe eines empirisch erlernten und/oder physikalischen Modells abgeleitet werden. Der Stand der Technik wird durch folgende Dokumente wiedergegeben: JP2008128809, US2009/266525, DE102013100099 und WO2004/063600.

Vorzugsweise erfolgt die momentane und/oder prädiktive Ermittlung der Wärmeentwicklung des Testobjektes auf der Basis zumindest einer Eingangsgröße mittels eines Wärmemodells des Testobjektes. Rechnerische Wärmemodelle werden beispielsweise bei der DE 10 2004 033 394 B3 verwendet, um die Temperatur von zu schützenden Bauteilen im Abgasstrang zu bestimmen. Das für das erfindungsgemäße Verfahren verwendete Wärmemodell basiert bevorzugt auf einfachen physikalischen Gesetzmäßigkeiten, beispielsweise auf der Energiebilanz des Testobjektes, und wird durch Eingangsgrößen empirisch an den jeweiligen Anwendungsfall angepasst. Das Wärmemodell bildet somit ein in Echtzeit arbeitendes halbempirisches Simulationsmodell. Daraus lassen sich betriebspunktabhängig die notwendigen Daten für eine prädiktive Regelung/Steuerung ermitteln, wobei die Regelparameter ständig optimiert werden können.

In einer besonders vorteilhaften Ausführung der Erfindung ist vorgesehen, dass dem Wärmemodell als Eingangsgröße zumindest ein Betriebsmesswert der des Testobjektes aus der Gruppe Leistung, Drehzahl, Energiezufuhr und/oder Kühlmitteltemperatur zugeführt wird. Aus diesen üblicherweise bei Wärmekraftmaschinen bekannten Betriebsmesswerten wird mittels des Wärmemodells eine Prognose für den Verlauf der Wärmeabgabe ermittelt, wobei thermische Trägheit, Totzeiten und Laufzeiten im System berücksichtigt werden.

Zum Unterschied zu der aus dem Stand der Technik bekannten trägen und Verzögerungszeitbehafteten direkten Temperaturregelung über die gemessenen Temperaturen wird beim erfindungsgemäßen Verfahren die jeweilige Wärmeentwicklung des Testobjektes in Echtzeit bzw. schon vor dem tatsächlichen Auftreten erkannt, wodurch sehr frühzeitig und präventiv Maßnahmen eingeleitet werden können, um ein übermäßiges Ansteigen der Umgebungstemperatur rechtzeitig zu verhindern. Dies erfolgt dadurch, dass im regulären Betrieb des Testobjektes üblicherweise erfasste Größen wie zum Beispiel Leistung, Drehzahl, Energiezufuhr, Objekttemperatur oder dergleichen einem geeigneten thermischen Rechenmodell (Wärmemodell) zugeführt werden und so dieses in einem selbstlernenden Prozess für den jeweiligen Anwendungsfall hinsichtlich der Genauigkeit weiter optimiert werden kann. Mittels des auf dem Wärmemodell basierenden virtuellen Wärmesensors wird die momentane Wärmeentwicklung bestimmt, wobei die Softwarelösung so aufgebaut sein muss, dass eine Echtzeitfähigkeit vorliegt. Dieser virtuelle Sensor der Wärmeentwicklung basiert also auf einem halb-empirisch aufgebauten Wärmemodell des Testobjektes und den im Prüfstandbetrieb laufend erfassten Größen. Auf weitere spezielle Sensoren kann verzichtet werden.

Besonders vorteilhaft ist es, wenn zusätzlich dem Wärmemodell Informationen über den zeitlichen Verlauf des Testzyklus - beispielsweise einem definierten Fahrzyklus eines Fahrzeuges - zugeführt werden. Dies ermöglicht es, auch planmäßige Änderungen der Last und der Drehzahl des Testobjektes in die Prognose für den zeitlichen Verlauf der Wärmeabgabe des Testobjektes einzubeziehen.

In Weiterführung der Erfindung kann auf der Basis des Wärmemodells eine modellbasierte Diagnose der Funktion der Konditioniereinrichtung durchgeführt werden. Als Ergebnis dieser Diagnose können Informationen, Empfehlungen und/oder Warnungen bei Fehlern im Betrieb an den Betreiber und/oder den Hersteller der Konditioniereinrichtung übermittelt werden. Dies ermöglicht es dem Betreiber bzw. den Hersteller der Konditioniereinrichtung gegebenenfalls eine geeignete Wartung dieser durchzuführen.

Beispielsweise können je nach Wärmebedarf und Temperaturniveau der vorhandenen Klimatisiereinrichtung der Prüfzelle und des Temperaturniveaus des Testobjektes Regelungs- bzw. Steuerungsparameter der Konditioniereinrichtung online angepasst und optimiert werden. Die bestimmte Totzeit im System kann dabei als Vorgabe für eine prädiktive Steuerung bzw. Regelung verwendet werden. Zusätzlich oder an Stelle einer Optimierung über Fernzugriff kann in die Regeleinrichtung der Konditioniereinrichtung ein Selbstoptimierungsalgorithmus integriert sein.

Die Daten aus dem ersten Simulationsmodell können als zusätzliche Größen für die Steuerung/Regelung der Konditioniereinrichtung verwendet werden.

In Weiterführung der Erfindung kann weiters vorgesehen sein, dass Konditioniereinrichtung - insbesondere die Wärmequelle und/oder Wärmesenke der Konditioniereinrichtung bzw. der Konditionierkreislauf der Wärmequelle und/oder Wärmesenke - in einem vorzugsweise halbempirischen zweiten Simulationsmodell abgebildet wird, wobei vorzugsweise auf der Basis des zweiten Simulationsmodells Totzeiten der Konditioniereinrichtung und/oder Regel-/Steuerungsparameter der Konditioniereinrichtung zur Durchführung einer prädiktiven Steuerung/Regelung ermittelt werden. Dies ermöglicht es, die Wärmesenke bzw. Wärmequelle ebenfalls prädiktiv zu optimieren, wobei vorteilhafterweise die Simulationen des Testobjektes und der Konditioniereinrichtungen miteinander kombiniert werden. Die prädiktive Optimierung betrifft sowohl Regelung, als auch Aktuatoren.

Zur Durchführung des Verfahrens ist eine Konditioniereinrichtung zur Regelung oder Steuerung der thermischen Bedingungen mit einer Steuereinheit und einer von dieser gesteuerten Wärmesenke vorgesehen, welcher die Wärme des Testobjektes zur Einhaltung einer vorgegebenen Solltemperatur zuführbar ist. Die Steuereinheit weist ein einen virtuellen Wärmesensor ausbildendes, vorzugsweises halbempirisches, Wärmemodell des Testobjektes auf, welches die Wärmeentwicklung und/oder Temperatur des Testobjektes momentan und/oder prädiktiv ermittelt und in Abhängigkeit der vorausgesagten Wärmeentwicklung des Testobjektes die Wärmesenke oder eine Wärmequelle regelt oder steuert. Die Steuereinheit ist - kabelgebunden oder kabellos - mit einer Schnittstelle des Testobjektes verbunden, um zumindest einen Betriebsmesswert des Testobjektes aus der Gruppe Leistung, Drehzahl, Energiezufuhr und/oder Kühlmitteltemperatur zu empfangen. Weiters kann vorteilhafter Weise die Steuereinheit einen Datenspeicher aufweisen oder mit einem Datenspeicher - kabellos oder kabelgebunden - verbunden sein, in welchem Informationen über den zeitlichen Verlauf des Testzyklus abgelegt sind.

In einer besonders vorteilhaften Ausführung der Erfindung ist vorgesehen, dass die Wärmesenke als physikalische Wärmesenke ausgebildet ist und ein definiertes Volumen für ein Wärmeträgermedium aufweist, indem das Wärmträgermedium zwischen dem Testobjekt und der Wärmesenke direkt austauschbar ist. Analog dazu kann die Wärmequelle als physikalische Wärmequelle ausgebildet sein und ein definiertes Volumen für ein Wärmeträgermedium aufweisen, indem das Wärmeträgermedium zwischen dem Testobjekt und der Wärmequelle direkt austauschbar ist. Dabei kann eine besonders rasche thermische Konditionierung erreicht werden, wenn die Entnahme des heißen Wärmeträgermediums - Fluid oder Luft - aus dem Kühlkreislauf möglichst nahe dem Testobjekt erfolgt. Dabei ist das Volumen so auszulegen, dass die Strömung des Wärmeträgermediums im Kühlkreislauf möglichst wenig gestört wird.

Die Wärmesenke und die Wärmequelle können dabei durch unterschiedliche Einrichtungen gebildet sein und beispielsweise unterschiedliche Kühlkreisläufe aufweisen. Eine besonders kompakte und teilesparende sowie einfach zu regelnde Ausführung der Erfindung sieht vor, dass Wärmesenke und Wärmequelle durch dieselbe Einrichtung, also beispielsweise durch denselben Kühlkreislauf gebildet sind.

Unter einer physikalischen Wärmesenke wird hier eine Wärmesenke verstanden, bei der direkt ein Wärmeträgermedium zwischen dem Testobjekt und der Wärmesenke mit unterschiedlichen Temperaturniveaus ausgetauscht wird. Analog dazu wird unter einer physikalischen Wärmequelle hier eine Wärmequelle verstanden, bei der direkt ein Wärmeträgermedium zwischen der Wärmequelle und dem Testobjekt mit unterschiedlichen Temperaturniveaus ausgetauscht wird. Zum Unterschied dazu erfolgt der Wärmeaustausch zwischen einem Testobjekt und einer kalorischen Wärmesenke bzw. kalorischen Wärmequelle üblicherweise über einen Wärmetauscher, wobei die Wärme über den Wärmedurchgang durch zumindest eine Wärmetauscherwand übertragen wird.

Die physikalische Wärmesenke bzw. physikalische Wärmequelle kann beispielsweise durch einen das definiertes Volumen für Wärmeträgermedium aufweisenden zuschaltbaren Behälter gebildet werden, in welchem das Wärmeträgermedium vorkonditioniert und bei Bedarf einem Standard-Kühlkreislauf zugeführt wird.

Eine bevorzugte Ausführung der Erfindung sieht vor, dass das definierte Kühlvolumen durch einen eine - vorzugsweise drehzahlregelbare - erste Fördereinrichtung aufweisenden Kühlreislauf gebildet ist, welcher über Zu- und Abfuhrströmungswege mit dem Testobjekt strömungsverbunden oder strömungsverbindbar ist. Optional kann stromabwärts oder stromaufwärts der ersten Fördereinrichtung ein erster Wärmetauscher angeordnet sein. Dieser erste Wärmetauscher kann beispielsweise ein Standardwärmetauscher einer vorhandenen Klimatisiereinrichtung der Prüfzelle sein.

Eine Ausgestaltung der Erfindung sieht vor, dass der Kühlkreis ein Bypassventil aufweist, mit welchem die Strömungsverbindung des Kühlkreislaufes zum Testobjekt geregelt herstellbar und/oder unterbrechbar ist.

Eine besonders vorteilhafte Ausführung der Erfindung sieht vor, dass der Kühlkreislauf einen Primärkreis mit der ersten Fördereinrichtung und einen Sekundärkreis mit einer zweiten Fördereinrichtung aufweist, wobei der Sekundärkreis in dem stromabwärts der ersten Fördereinrichtung angeordneten ersten Knotenpunkt vom Primärkreis abzweigt und in einem stromabwärts des ersten Knotenpunktes des Primärkreises angeordneten zweiten Knotenpunkt in den Primärkreis mündet, wobei vorzugsweise die zweite Fördereinrichtung drehzahlregelbar ist. Vorzugsweise ist der Kühlkreislauf zwischen dem ersten Knotenpunkt und dem zweiten Knotenpunk des Primärkreises einerseits und des Sekundärkreises andererseits ventillos ausgeführt. Zur Kühlung des Wärmeträgermedium im Sekundärkreis ist es vorteilhaft, wenn stromabwärts oder stromaufwärts der zweiten Fördereinrichtung ein zweiter Wärmetauscher angeordnet ist. Die physikalische Wärmesenke/Wärmequelle wird hier vor allem durch den Sekundärkreis des Kühlkreislaufes des Wärmeträgermediums gebildet, wobei der Sekundärkreislauf nur durch Einschalten der zweiten Fördereinrichtung aktiviert bzw. deaktiviert wird. Bei Aktivieren der zweiten Fördereinrichtung wird das Wärmeträgermedium des Sekundärkreises sehr rasch in den Kühlkreislauf eingebunden, wobei das im ersten Knotenpunkt des Primärkreises von diesem abgezweigte und durch die zweite Fördereinrichtung geförderte Wärmeträgermedium durch den zweiten Wärmetauscher strömt, vorkonditioniert wird und schließlich im zweiten Knotenpunkt in den Primärkreis des Kühlkreislaufes eingespeist wird. Durch die Vorkonditionierung des Wärmemediums im Sekundärkreis erfolgt der Wärmeaustausch durch den physikalischen Austausch des Kühlmediums sehr rasch. Eine weitere Beschleunigung des Wärmeaustausches kann erreicht werden, wenn die erste und/oder zweite Fördereinrichtung als Verdrängermaschine(n), vorzugsweise als Zahnradpumpe, ausgebildet sind/ist. Verdrängermaschinen haben im Vergleich zu Strömungsmaschinen ein schnelleres Ansprechverhalten, wodurch entscheidende Totzeit bei Aktivieren der jeweiligen Fördereinrichtung eingespart werden kann.

Durch Verwendung einer physikalischen Wärmesenke bzw. Wärmequelle kann die Temperatur-Regeldynamik deutlich erhöht werden; diese ist nur näherungsweise von der Änderungsgeschwindigkeit des Wärmeträgermedienstromes $\dot{m}$ abhängig. Der Einfluss durch die thermische Trägheit des Systems ist stark reduziert. Eine gegebenenfalls unerwünschte Beeinflussung der Strömung im Primärkreislauf des Wärmeträgermedienstromes kann durch entsprechende konstruktive Auslegung bzw. die Anordnung der Zu- und Abfuhr des Wärmeträgermedienstromes in strömungstechnisch geeigneten Zonen vermieden werden. Der Durchfluss-Widerstand des Kühlkreislaufes lässt sich so durch angepasste Strömungsführung dem realen Motorkreislauf angleichen.

Die Erfindung wird im Folgenden anhand der in den in den Figuren gezeigten nicht einschränkenden Ausführungsbeispielen näher erläutert. Darin zeigen schematisch:

Fig. 1     einen Prüfstand für Kraftfahrzeuge mit einer erfindungsgemäßen Einrichtung zur Regelung oder Steuerung der thermischen Umgebungsbedingungen an einem Prüfstand;

Fig. 2     ein Kennfeld eines Standard-Wärmetauschers für ein Testobjekt;

Fig. 3     den zeitlichen Verzug bei einer bekannten Konditioniereinrichtung;

Fig. 4     Simulationsmodelle und Steuerung der Konditioniereinrichtung in einer erfindungsgemäßen Ausführungsvariante;

Fig. 5     das zweite Simulationsmodell dieser Konditioniereinrichtung;

Fig. 6     eine Funktionsaufteilung der ersten und zweiten Simulationsmodelle einer erfindungsgemäßen Konditioniereinrichtung in einer Ausführungsvariante;

Fig. 7     das Prinzip einer physikalischen Wärmesenke bzw. physikalischen Wärmequelle; und

Fig. 8     bis Fig. 12 erfindungsgemäße Konditioniereinrichtungen in verschiedenen Ausführungsvarianten.

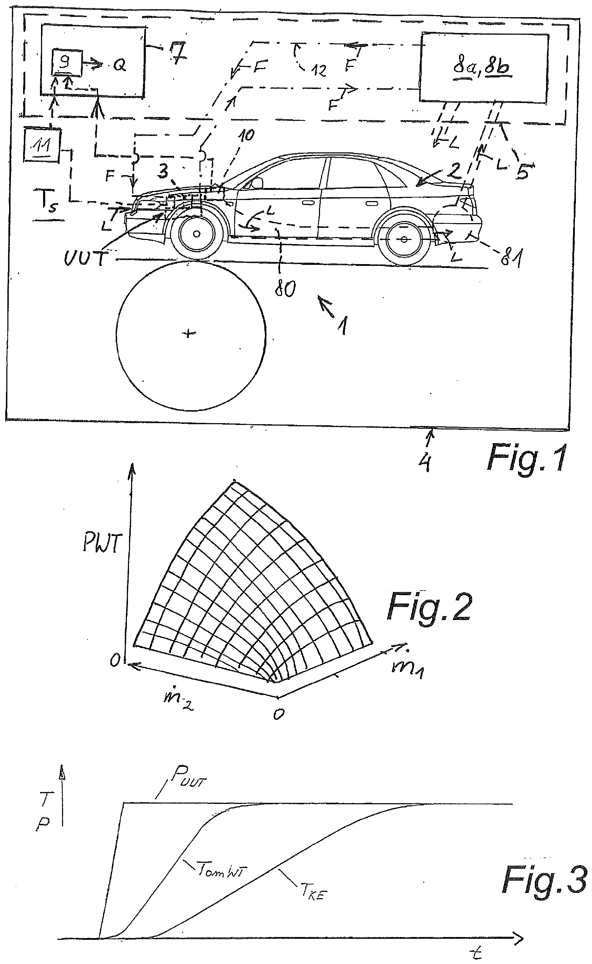

Fig. 1 zeigt einen Prüfstand 1 für ein Testobjekt UUT (Unit Under Test), wobei der Prüfstand 1 im dargestellten Beispiel als Rollenprüfstand für ein Kraftfahrzeug 2 ausgebildet ist. Das Testobjekt UUT wird im Ausführungsbeispiel durch die Brennkraftmaschine 3 des Kraftfahrzeugs 2 gebildet, wobei die Wärme abgebende Brennkraftmaschine 3 nach einem definierten Testzyklus betrieben wird. Das Testobjekt UUT kann aber auch durch eine andere Wärmekraftmaschine und/oder durch eine oder mehrere elektrische Maschinen, durch das gesamte Kraftfahrzeug 2, oder aber auch durch eine Kälte abgebende Maschine gebildet sein.

Der Prüfstand 1 ist in einer Prüfzelle 4 angeordnet, in welchem während der Durchführung der Prüfung eine in einem relativ engen zulässigen Temperaturfenster definierte Solltemperatur $T_s$ durch eine Konditioniereinrichtung 5 zur Regelung und Steuerung der thermischen Umgebungsbedingungen gehalten werden soll. Die Konditioniereinrichtung 5 zur Regelung und Steuerung weist eine Steuereinheit 7 und eine konventionelle oder auch physikalische Wärmesenke 8a und/oder eine Wärmequelle 8b auf, welche von der Steuereinheit 7 geregelt oder gesteuert wird bzw. werden. Die Wärmequelle 8b wird beispielsweise eingesetzt, um das Testobjekt UUT rasch auf Betriebstemperatur zu bringen.

In Fig. 1 sind zwei Fälle zur Regelung bzw. Steuerung der thermischen Bedingungen mit einer erfindungsgemäßen Konditioniereinrichtung 5 schematisch dargestellt, welche getrennt oder auch in Kombination miteinander durchgeführt werden können.

Im ersten Fall wird strömt Fluid in einem mit strichpunktierten Linien angedeuteten Kühlkreislauf 12 entsprechend den Pfeilen F zu einem beispielsweise durch die Brennkraftmaschine 3 gebildeten Testobjekt UUT und nimmt dabei Wärme des Testobjektes UUT auf. Das erwärmte Fluid F wird der Wärmesenke 8a (bzw. Wärmequelle 8b bei zu geringer Fluidtemperatur) der Konditioniereinrichtung 5 zugeführt und auf die gewünschte Temperatur konditioniert.

Im in Fig. 1 mit strichlierten Linien dargestellten zweiten Fall strömt Luft entsprechend den Pfeilen L bei einer Umgebungstemperatur von beispielsweise 20° zum durch das Kraftfahrzeuges 2 samt Brennkraftmaschine 3 gebildeten Testobjekt UUT und nimmt dabei Wärme des Testobjektes UUT auf. Die erwärmte Luft L wird in einem Abluftkanal 80 gesammelt und über ein nahe dem Austritt des Abluftkanals 80 angeordnetes Sauggebläse 81 bei einer Temperatur von beispielsweise 60°C der Wärmesenke 8a (bzw. Wärmequelle 8b bei zu geringer Umgebungstemperatur und/oder Ablufttemperatur) der Konditioniereinrichtung 5 zugeführt und auf die gewünschte Temperatur konditioniert. Danach wird die Kühlluft wieder dem Innenraum der Prüfzelle 4 bzw. der Umgebung des Testobjektes UUT zugeführt.

Die Entnahme des heißen oder kalten Wärmeträgermediums - Fluid und/oder Luft - erfolgt somit möglichst nahe dem Testobjekt UUT, wodurch eine besonders rasche thermische Konditionierung erreicht werden kann.

Die Steuereinheit 7 weist zur Abbildung des Testobjektes UUT ein erstes Simulationsmodell 9 auf, welches durch ein halbempirisches thermisches Modell des Testobjektes UUT gebildet wird. Das erste Simulationsmodell 9 kann als virtueller Sensor eingesetzt werden, um zusätzliche - nicht direkt sensorisch erfasste Größen zu nutzen. Mit dem halbempirischen thermischen Modell wird die Wärmeentwicklung Q momentan und/oder prädiktiv ermittelt. Auf Grund der vorausgesagten Wärmeentwicklung Q wird die Wärmesenke 8a oder die Wärmequelle 8b entsprechend geregelt oder gesteuert, um die definierte Solltemperatur $T_s$ bzw. den zeitlichen Verlauf der Solltemperatur $T_s$ des Testobjektes UUT und/oder der Umgebungstemperatur des Testobjektes UUT einzuhalten. Die Steuereinheit 7 ist kabellos oder kabelgebunden mit der Prüfstandsteuerung oder einer Schnittstelle 10 des Testobjektes UUT verbunden, um zumindest einen Betriebsmesswert des Testobjektes UUT aus der Gruppe Leistung, Drehzahl, Energiezufuhr und/oder Objekttemperaturen des Testobjektes UUT zu empfangen. Weiters ist im gezeigten Ausführungsbeispiel die Steuereinheit 7 mit einem Datenspeicher 11 verbunden, in welchem Informationen über den zeitlichen Verlauf des aktuellen Testzyklus für das Testobjekt UUT abgelegt sind.

Die Konditioniereinrichtung 5 hat die Aufgabe, ein flüssiges oder gasförmiges Wärmeträgermedium - also Fluid oder Luft - auf eine gewünschte Temperatur zu bringen bzw. zu halten, wobei diesem Wärmeträgermedium vom Testobjekt UUT sehr unterschiedlich (0-100%) Wärme Q zu- oder abgeführt wird.

Einerseits ist vor allem im instationären Betrieb eines beispielsweise durch eine Brennkraftmaschine 3 gebildeten Testobjektes UUT die zu- oder abzuführende Wärmemenge Q sehr variabel. Andererseits ist auch das Temperaturniveau T bzw. die Wärmeleistung PWT und der Massenstrom $\dot{m}_1, \dot{m}_2$ des Wärmeträgermediums zwischen dem Testobjekt UUT und der Wärmesenke 8a bzw. Wärmequelle 8b sehr unterschiedlich, wie in Fig. 2 schematisch angedeutet ist. Dies bewirkt hinsichtlich der Regelung/Steuerung hohe Anforderungen, die optimalen Regelparameter variieren entsprechend. Hinzu kommt, dass sich die gewünschten Temperaturen des Wärmeträgermediums im Kühlkreislauf der Konditioniereinrichtung 5 durch die thermische Trägheit der Komponenten der Konditioniereinrichtung 5 und durch die Laufzeit des Wärmeträgermediums im Kühlkreislauf der Konditioniereinrichtung 5 nur verzögert einstellen, wie in Fig. 3 schematisch dargestellt ist. Auf eine Leistungsanforderung $P_{UUT}$ und somit plötzliche Wärmefreisetzung am Testobjekt UUT reagieren herkömmliche Konditioniereinrichtungen 5 konzeptbedingt mit einer relativ großen zeitlichen Verzögerung bei der Wärmeabfuhr, einerseits durch die Laufzeit des Wärmeträgermediums (angedeutet mit dem Verlauf der Temperatur $T_{0mWT}$ des Wärmeträgermediums) und andererseits durch die thermische Trägheit von Komponenten der Konditioniereinrichtung 5 (angedeutet durch den Verlauf der Temperatur $T_{KE}$ von Komponenten wie Leitungen, Pumpen, Ventile, Wärmetauscher, etc. der Konditioniereinrichtung 5).

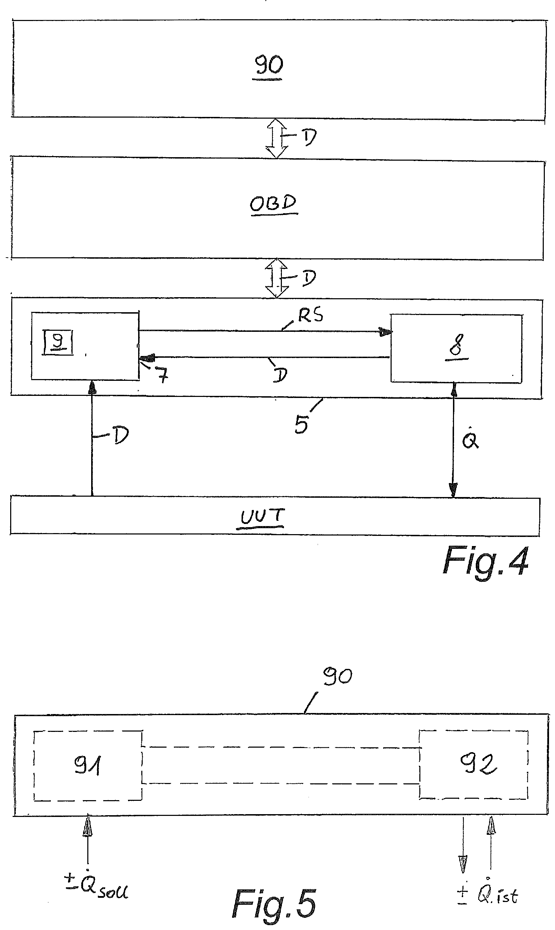

Gemäß der Erfindung wird die Konditioniereinrichtung 5 parallel zum realen Betrieb in einem zweiten Simulationsmodell 90 thermisch und hinsichtlich der Laufzeiten virtuell abgebildet, wie in Fig. 4 schematisch dargestellt ist. Das zweite Simulationsmodell 90 kann ein physikalisches oder halbempirisches Modell der Konditioniereinheit 5 oder des gesamten Kühlkreislaufes 12 sein. Die Steuereinheit 7 der Konditioniereinheit 5 empfängt laufend Daten des Testobjektes UUT, also sowohl momentane Messdaten, als auch Informationen über bevorstehende Änderungen der Betriebsweise des Testobjektes UUT. Das zweite Simulationsmodell 90 kann wie das erste Simulationsmodell 9 in die Steuereinheit 7 implementiert sein. Aufgaben des zweiten Simulationsmodelles 90 sind:

(1) Durchführung einer modellbasierten Diagnose der Funktionen der Konditioniereinrichtung 5, um frühzeitig Informationen, Empfehlungen und/ oder Warnungen bei Fehler im Betrieb für Betreiber und Hersteller der Konditioniereinrichtung 5 zur Verfügung stellen zu können. Parallel dazu kann eine konventionelle On-Board-Diagnostik OBD auf der Basis eines Soll-Ist-Vergleiches von Messdaten und Bauteilfunktionen durchgeführt werden, wobei die Daten D aus dem zweiten Simulationsmodell 90 und die Ergebnisse der On Board Diagnostik OBD aufeinander abgestimmt oder gegenseitig ergänzt werden können.

(2) Online Anpassung/Optimierung der Regler/Steuerungs-Parameter RS je nach Wärmebedarf und der Temperaturniveaus der prüfstandseigenen Klimatisiereinrichtung 6 und des Testobjektes UUT.

(3) Bestimmung der Totzeiten im System der Konditioniereinrichtung 5 als Vorgabe für eine prädiktive Steuerung/Regelung.

(4) Durchführen einer integrierten Selbstoptimierung der Konditioniereinrichtung 5.

Dabei wird das zweite Simulationsmodell 90 als sogenannter virtueller Sensor verwendet, indem Daten aus dem zweiten Simulationsmodell 90 als zusätzliche Größen genutzt werden.

Der Daten- und Informationenaustausch ist durch Pfeile D angedeutet.

Daraus lassen sich also folgende Funktionen ableiten:

1.) Überwachung der Sensoren und Aktuatoren durch On-Board Diagnose OBD: durch diese konventionelle Diagnose durch Soll-Istwert-Vergleich von Messdaten und Bauteilparametern können die Funktionen von Sensoren und Aktuatoren mit der Simulation verglichen und Fehler frühzeitig entdeckt werden.

2.) Betreiber und/oder Hersteller der Konditioniereinrichtung 5 werden ständig und in Echtzeit über den Zustand der Konditioniereinrichtung 5 informiert: Somit können frühzeitig geeignete Maßnahmen zur Wartung der Konditioniereinrichtung 5 ergriffen werden.

3.) Erfassung der thermischen Trägheit und der Laufzeiten im System der Konditioniereinrichtung 5 mittels des halbempirischen zweiten Simulationsmodell 90 in Echtzeit; daraus lassen sich betriebspunktabhängig die notwendigen Parameter für eine prädiktive Regelung/Steuerung ermitteln.

4.) Kontinuierliche Optimierung der Regelparameter: durch die Simulation können die Regelparameter in Echtzeit laufend angepasst und optimiert werden, wodurch ein rasches Nachregeln auf ändernde Verhältnisse gewährleistet ist.

In Fig. 5 ist das zweite Simulationsmodell 90 der Konditioniereinrichtung 5 schematisch dargestellt. Es besteht aus Software 91, welche auf einem physikalischen oder halbempirischen mathematischen Modell basiert, und Hardware 92. In der Software 91 werden die Anforderungen an die Wärmeab- oder -zufuhr als $\dot{Q}_{soll}$ formuliert, woraus sich der Einsatz einer Wärmesenke oder Wärmequelle der Konditioniereinrichtung 5 ergibt. Dieser Sollwert $\dot{Q}_{soll}$ wird mit dem ermittelten Istwert $Q_{ist}$ verglichen.

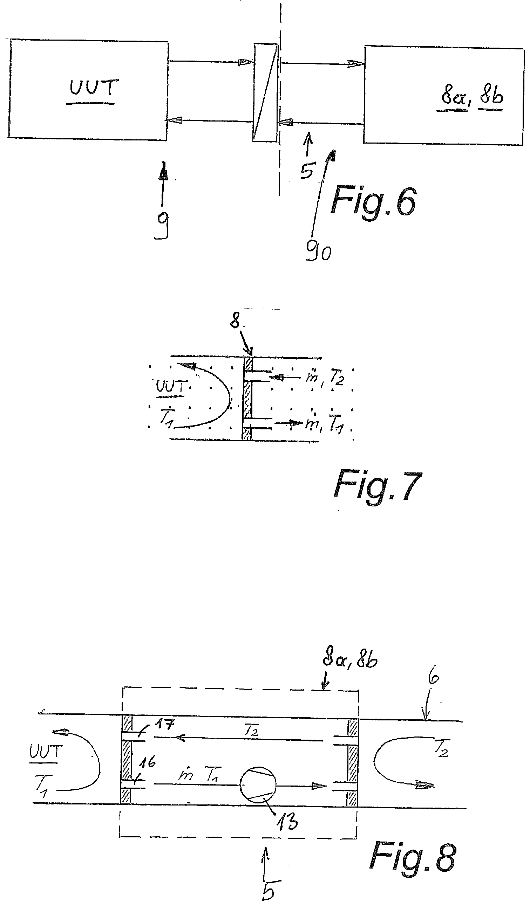

Fig. 6 zeigt schematisch das Zusammenwirken des halbempirischen ersten Simulationsmodells 9 des Testobjektes UUT und des zweiten Simulationsmodells 90 der Konditioniereinrichtung 5. Mittels des ersten Simulationsmodells 9 wird eine erste Prädiktion über die zu erwartenden primärseitig auftretenden Wärmemengen $\dot{m}_1$ auf Grund der aktuellen Betriebsparameter und auf Grund des bekannten Testzyklus vorgenommen. Weiters wird mittels des zweiten Simulationsmodelles 90 eine zweite Prädiktion über die zu erwartenden Verzögerungen bei der Wärmeabfuhr unter Berücksichtigung der thermischen Trägheiten und Laufzeiten im sekundärseitigen System, also der Konditioniereinrichtung 5 vorgenommen. Als Ergebnis der ersten und zweiten Prädiktion wird der optimale Zeitpunkt zum Aktivieren der Konditioniereinrichtung 5 und/oder die Parameter zum Steuern/Regeln der Konditioniereinrichtung 5 bestimmt.

In Fig. 7 ist das Prinzip einer durch Bezugszeichen 8 angedeuteten physikalischen Wärmesenke bzw. physikalischen Wärmequelle dargestellt: Bei einer physikalischen Wärmesenke bzw. Wärmequelle 8 erfolgt der erforderliche Wärmeaustausch nicht wie bei konventionellen kalorischen Wärmesenken relativ langsam über den Wärmedurchgang durch eine Wärmetauscherwand, sondern durch direkten Tausch eines Wärmeträgermediums gemäß der Gleichung:

$$\dot{Q} = \dot{m} \cdot c \cdot (T_1 - T_2)$$

Dabei ist $\dot{Q}$ der Wärmestrom, $\dot{m}$ der Wärmeträgermedienstrom, c die spezifische Wärmekapazität des

Wärmeträgermediums, $T_1$ die Temperatur des Testobjektes UUT und $T_2$ die Temperatur der physikalischen Wärmesenke bzw. Wärmequelle 8.

Dies ermöglicht einen vom Wärmedurchgang durch eine Wärmetauscherwand unabhängigen und damit wesentlich rascheren Wärmetausch, wodurch eine ausreichend hohe Dynamik erzielt werden kann.

Wie in Fig. 8 dargestellt, kann die Wärmesenke 8a oder Wärmequelle 8b - welche als physikalische Wärmesenke bzw. physikalische Wärmequelle 8 ausgebildet sind, eine Fördereinrichtung 13, zum Beispiel eine drehzahlgeregelte Pumpe, aufweisen, über welche das Wärmeträgermedium gefördert wird, wobei ein Austausch der Massenströme $\dot{m}$ des Wärmeträgermediums der Temperaturniveaus $T_1$ und $T_2$ erfolgt.

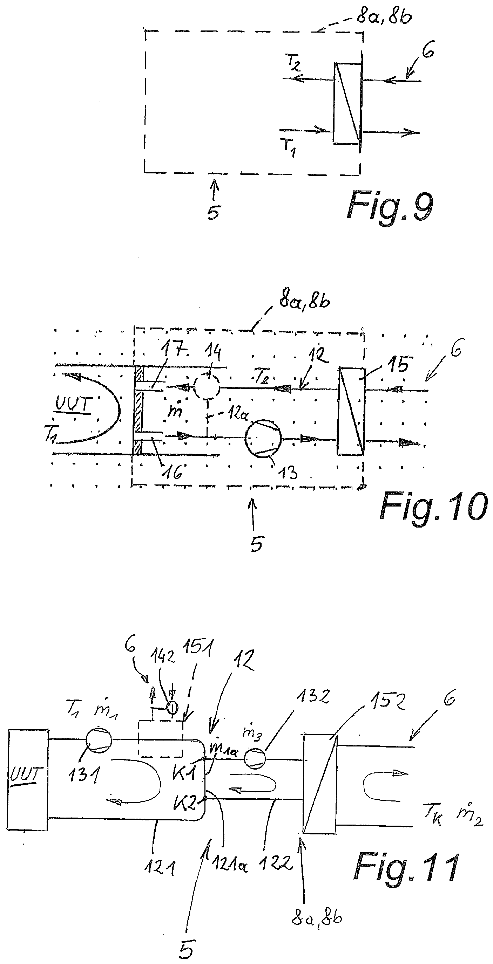

Mitunter kann eine Trennung der Kühlmedien des Testobjektes und der prüfstandseigenen Klimatisiereinrichtung 6 gewünscht sein. Um dies zu erreichen, kann eine kalorischer Wärmetauscher 15 zwischen der Konditioniereinrichtung 5 und der prüfstandseigenen Klimatisiereinrichtung 6 vorgesehen sein, wie in Fig. 9 schematisch gezeigt ist.

Fig. 10 zeigt schematisch eine Ausführung einer - ebenfalls physikalischen - Wärmesenke 8a bzw. Wärmequelle 8b, bei der der Medientausch des Wärmeträgermediums in einem eigenen Kühlkreislauf 12 über eine eigene Fördereinrichtung 13, zum Beispiel eine drehzahlgeregelte Pumpe, erfolgt. Beispielsweise kann über das Bypassventil 14 der Durchfluss durch einen Bypass-Strömungsweg 12a reguliert werden, wodurch die dem Testobjekt UUT entzogene oder zugeführte Wärme variiert werden kann. Die Fördereinrichtung 13 kann beispielsweise als Strömungsmaschine ausgebildet sein. Ein besonders rascher Wärmeaustausch und schnelles Ansprechverhalten lässt sich erreichen, wenn die Fördereinrichtung 13 als Verdrängermaschine, beispielsweise als Zahnradpumpe ausgebildet ist. Mit Bezugszeichen 15 ist eine beispielsweise durch einen konventionellen kalorischen Wärmetauscher gebildete Kühleinrichtung bezeichnet, mit welcher - wie in Fig. 9 bereits illustriert - eine Trennung der Wärmeträgermedien der Konditioniereinrichtung 5 und der prüfstandseigenen Klimatisiereinrichtung 6 erfolgt. Alternativ zu einer drehzahlgeregelten Pumpe kann für die Fördereinrichtung 13 auch eine Pumpe mit konstanter Drehzahl verwendet werden. In diesem Fall ist es zur Mengenregelung des Wärmeträgermediums im Kühlkreislauf 12 vorteilhaft einen Bypass-Strömungsweg 12a vorzusehen, dessen Durchfluss über ein Bypassventil 14 gesteuert bzw. geregelt werden kann, wie durch strichlierte Linien in Fig. 10 angedeutet ist. Über das Bypassventil 14 kann der Durchfluss im Bypass-Strömungsweg 12a reguliert werden, wodurch die dem Testobjekt UUT entzogene oder zugeführte Wärme variiert werden kann. Über das Bypassventil 14 kann der Kühlkreislauf 12 mit dem des Testobjekt UUT verbunden oder von diesem getrennt werden, wobei die Strömungsverbindungen des Kühlkreislauf 12 mit dem Testobjekt UUT über zumindest einen Zuströmungsweg 16 und zumindest einen Abströmungsweg 17 erfolgt.

Fig. 11 zeigt eine weitere Ausführung der Erfindung wobei der Kühlkreislauf 12 einen Primärkreis 121 und einen Sekundärkreis 122 aufweist. Der Sekundärkreis 122 zweigt vom Primärkreis 121 in einem ersten Kontenpunkt K1 ab und mündet in den Primärkreis 121 in einem zweiten Knotenpunkt K2 wieder ein. Der Primärkreis 121 weist eine erste Fördereinrichtung 131 und der Sekundärkreis 122 eine zweite Fördereinrichtung 132 auf. Mit Bezugszeichen 151 ist ein im Primärkreis 121 angeordneter optionaler erster Wärmetauscher bezeichnet, welcher stromabwärts der ersten Fördereinrichtung 131 angeordnet ist. Die erste Fördereinrichtung 131 kann aber auch stromabwärts des zweiten Knotenpunkt K2 vorgesehen sein. Dieser Wärmetauscher kann beispielsweise durch einen konventionellen Systemkühler der prüfstandseigenen Klimatisiereinrichtung 6 gebildet sein. Im Sekundärkreis 122 ist eine zweite Fördereinrichtung 132 und ein zweiter Wärmetauscher 152 angeordnet, welcher durch ein weiteres Kühlmedium mit der Temperatur TK und dem zweiten Massenstrom $\dot{m}_2$ gekühlt wird. Der zweite Wärmetauscher 152 kann stromabwärts oder stromaufwärts der zweiten Fördereinrichtung angeordnet sein. Der Primärkreis 121 mit dem eine kalorische Wärmesenke bildenden ersten Wärmetauscher 151 arbeitet in konventioneller Weise durch Wärmeübergang an den Wärmetauscherwänden des ersten Wärmetauschers 151. Im stationären Betrieb ist nur die erste Fördereinrichtung 131 eingeschaltet und fördert den ersten Massenstrom $\dot{m}_1$, die zweite Fördereinrichtung 132 dagegen ist deaktiviert, sodass im Sekundärkreis 122 kein Massenfluss erfolgt. Im Falle eines erhöhten Konditionierungsbedarfes wird der Sekundärkreis 122 durch Aktivieren der zweiten Fördereinrichtung 132 dazu geschaltet, wodurch ein dritter Massenstrom $\dot{m}_3$ gefördert wird. Bei entsprechender Dimensionierung der zweiten Fördereinrichtung 132 wird ein Großteil des ersten $\dot{m}_1$ Massenstroms in den Sekundärkreis gefördert - nur ein geringer Teil $\dot{m}_{1a}$ wird durch den Leitungsteil 121a des Primärkreises 121 zwischen den Knotenpunkten K1 und K2 strömen. Somit wird das im Sekundärkreis 122 durch den zweiten Wärmetauscher 152 bereits vorkonditionierte Wärmeträgermedium in den Primärkreis 121 eingeleitet. Es kommt somit zu einem direkten Austausch des Wärmeträgermediums zwischen des Testobjektes UUT und der Wärmesenke 8a bzw. Wärmequelle 8b, welche somit in dem beschriebenen Sinne als physikalische Wärmesenke bzw. physikalische Wärmequelle 8 ausgebildet sind. Der Kühlkreislauf 12 ist bevorzugt völlig ohne irgendwelche Schaltventile ausgeführt, wodurch Ansprechzeiten dieser Schaltventile wegfallen. Das Zuschalten bzw. Wegschalten des Sekundärkreises 122 erfolgt somit nur durch Aktivieren bzw. Deaktivieren der zweiten Fördereinrichtung 132. Dies ermöglicht einen raschen Wärmeaustausch.

Um einen besonders raschen Wärmeaustausch zu ermöglichen, ist es besonders vorteilhaft, wenn zumindest die zweite Fördereinrichtung 132 als Verdrängermaschine, beispielsweise als Zahnradpumpe ausgebildet ist.

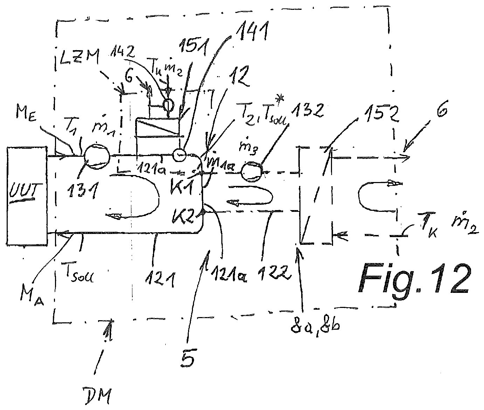

Fig. 12 unterscheidet sich von der in Fig. 11 dargestellten Ausführung dadurch, dass der erste Wärmetauscher 151 über einen Bypass-Strömungsweg 121a im Kühlkreislauf 12 umgehbar ist, wobei der Bypass-Strömungsweg 121a über ein erstes Bypassventil 141 reguliert werden kann. Zusätzlich oder alternativ kann auch ein zweites Bypassventil 142 im Medienkreislauf der Klimatisiereinrichtung 6 vorgesehen sein. Diese beispielsweise als 3/2-Ventile ausgebildeten Bypassventile 141, 142 ermöglichen es, die Kühlleistung der Konditioniereinrichtung 5 an die Erfordernisse anzupassen.

Ein breites Anwendungsspektrum der Konditioniereinrichtung 5 wird durch einen modulartigen Aufbau möglich. So können der erste Wärmetauscher 151 und/oder der zweite Wärmetauscher 152 als Module ausgebildet sein, welche bei Bedarf an den Kühlkreislauf 12 angeschlossen werden können, wie dies durch strichlierte Linien in Fig. 11 und Fig. 12 angedeutet ist. Der erste Wärmetauscher 151 kann beispielsweise als Laufzeitmodul LZM fungieren.

Der spezifische Vorsteuerwärmestrom $\dot{q}$ lässt sich ausdrücken durch

$$\dot{q} = \dot{m}_1 \cdot c \cdot \frac{T_1 - T_{Soll}^*}{T_1 - T_K},$$

mit

$\dot{m}_1$.      Wärmeträgermediumstrom des Kühlkreislaufes 12,

$\dot{m}_2$.      Wärmeträgermediumstrom des Kreislaufes der Klimatisiereinrichtung 6,

c      spezifische Wärmekapazität,

$T_1$      Temperatur Testobjekt bzw. Temperatur am Moduleingang ME bzw. am Eingang des ersten Wärmetauschers 151,

$T_{Soll}^*$      Soll-Temperatur am Ausgang des ersten Wärmetauschers 151,

$T_K$      Temperatur des Kühlmediums der Klimatisiereinrichtung 6,

$T_2$      Ist-Temperatur am Ausgang des ersten Wärmetauschers 151.

Mit dem aus erstem 151 und zweitem Wärmetauscher 152 bestehenden Dynamikmodul DM lässt sich somit am Modulausgang MA ein spezifischer Korrekturwärmestrom $\dot{q}_{Soll} = \dot{q} \pm \Delta\dot{q}$ wie folgt erzielen:

$$\dot{q}_{Soll} = \dot{m}_1 \cdot c \cdot \frac{(T_1 - T_{Soll}^*) + (T_2 - T_{Soll}^*)}{T_1 - T_K}$$

Mit $\dot{q}_{Soll} = A\,k_{soll}$, wobei A die Wärmedurchgangsfläche und $k_{soll}$ der Wärmeübergangskoeffizient des bzw. der Wärmetauscher 151, 152 ist, und der Abhängigkeit $k_{soll} = f(\dot{m}_1, \dot{m}_2)$ lässt sich der Korrekturwärmestrom $\dot{q}_{Soll}$ durch die Ventilstellung des ersten 141 und/oder zweiten Bypassventiles 142 einstellen.

Gemäß dem erfindungsgemäßen Verfahren wird mit dem ersten Simulationsmodell 9 in Echtzeit die aktuelle Wärmeentwicklung Q und/oder zukünftige Wärmeentwicklung Q des Testobjektes UUT ermittelt, mit dem zweiten Simulationsmodell 90 die optimalen Regel-/Steuerungsparameter und der optimale Zeitpunkt des Eingriffs unter Berücksichtigung der sekundärseitigen Totzeiten bzw. Laufzeiten bestimmt und damit die Wärmesenke 8a bzw. Wärmequelle 8b geregelt oder gesteuert. Mit dem ersten Simulationsmodell 9 und dem zweiten Simulationsmodell 90 des Testobjektes UUT ist man somit in der Lage, schon zu Beginn einer Änderung der Wärmeentwicklung Q darauf reagieren zu können. Eine solche prädiktive Temperaturregelung ist besser zu gestalten, effizienter bzw. genauer als bisherige Lösungen. Insbesondere kann über die Informationen der aktuellen Wärmeabgabe des Testobjektes UUT nicht nur dieses selbst, sondern auch die Klimatisierung der Prüfzelle 4 wesentlich früher angesteuert werden.

**Patentansprüche**

1.    Verfahren zur Regelung oder Steuerung der thermischen Bedingungen an einem Prüfstand (4) für zumindest ein Wärme- oder Kälte abgebendes Testobjekt (UUT), und/oder zur Regelung oder Steuerung der thermischen Bedingungen des Testobjektes (UUT), insbesondere zumindest einer beispielsweise als Brennkraftmaschine ausgebildeten Wärmekraftmaschine und/oder zumindest einer elektrischen Maschine, wobei zur Einhaltung einer vorgegebenen Solltemperatur ($T_s$) oder eines vorgegebenen zeitlichen Verlaufes der Solltemperatur ($T_s$) ein Wärmeträgermedium zwischen dem Testobjekt (UUT) und einer Wärmesenke (8a) oder Wärmequelle (8b) einer Konditioniereinrichtung (5) geführt wird, **dadurch gekennzeichnet, dass** die Wärmeentwicklung (Q) und/oder Temperatur des Testobjektes (UUT) mittels zumindest eines ersten Simulationsmodells (9) momentan und/oder prädiktiv ermittelt wird und in Abhängigkeit der momentanen und/oder prädiktiven Wärmeentwicklung (Q) des Testobjektes (UUT) die Wärmesenke (8a) oder eine Wärmequelle (8b) geregelt oder gesteuert wird.

2.    Verfahren nach Anspruch 1, **dadurch gekennzeichnet, dass** das erste Simulationsmodell (9) ein - vorzugsweise halbempirisches - Wärmemodell des Testobjektes (UUT) aufweist, wobei die momentane und/oder prädiktive Ermittlung der Wärmeentwicklung (Q) des Testobjektes (UUT) auf der Basis zumindest einer Eingangsgröße mittels des Wärmemodells erfolgt.

3. Verfahren nach Anspruch 1 oder 2, **dadurch gekennzeichnet, dass** dem ersten Simulationsmodell (9) als Eingangsgrößen zumindest ein Betriebsmesswert des Testobjektes (UUT) aus der Gruppe Leistung, Drehzahl, Energiezufuhr und/oder Objekttemperatur zugeführt wird.

4. Verfahren nach einem der Ansprüche 1 bis 3, wobei das Testobjekt (3) nach einem sich zeitlich ändernden Testzyklus betrieben wird, **dadurch gekennzeichnet, dass** dem ersten Simulationsmodell (9) als Eingangsgröße Informationen über den zeitlichen Verlauf des Testzyklus zugeführt werden.

5. Verfahren nach einem der Ansprüche 1 bis 4, **dadurch gekennzeichnet, dass** zur Regelung oder Steuerung der thermischen Bedingungen ein Wärmeträgermedium direkt zwischen dem Testobjekt (UUT) und einem definierten Kühlvolumen der Wärmesenke (8a) oder der Wärmequelle (8b) ausgetauscht wird.

6. Verfahren nach einem der Ansprüche 1 bis 5, **dadurch gekennzeichnet, dass** die Konditioniereinrichtung (5) in einem vorzugsweise halbempirischen zweiten Simulationsmodell (90) abgebildet wird.

7. Verfahren nach Anspruch 6, **dadurch gekennzeichnet, dass** auf der Basis des zweiten Simulationsmodells (90) Totzeiten der Konditioniereinrichtung (5) und/oder Regel-/Steuerungsparameter der Konditioniereinrichtung (5) zur Durchführung einer prädiktiven Steuerung/Regelung ermittelt werden.

8. Konditioniereinrichtung (5) zur Durchführung des Verfahrens zur Regelung oder Steuerung der thermischen Bedingungen an einem Prüfstand (4) für zumindest ein Wärme- oder Kälte abgebendes Testobjekt (UUT), und/oder zur Regelung oder Steuerung der thermischen Bedingungen des Testobjektes (UUT), insbesondere zumindest einer beispielsweise als Brennkraftmaschine (3) ausgebildeten Wärmekraftmaschine und/oder zumindest einer elektrischen Maschine, wobei die Konditioniereinrichtung (5) eine Steuereinheit (7) und eine von dieser gesteuerte Wärmesenke (8a) und/oder Wärmequelle (8b) aufweist, wobei zur Einhaltung einer vorgegebenen Solltemperatur ($T_s$) oder eines vorgegebenen Verlaufes der Solltemperatur ($T_s$) ein Wärmeträgermedium zwischen dem Testobjekt (UUT) und der Wärmesenke (8a) oder zwischen der Wärmequelle (8b) und dem Testobjekt (UUT) führbar ist, nach einem der Ansprüche 1 bis 7, **dadurch gekennzeichnet, dass** die Steuereinheit (7) zumindest ein erstes Simulationsmodell (9) mit einem, vorzugsweises halbempirischen, Wärmemodell des Testobjektes (UUT) aufweist, welches die Wärmeentwicklung (Q) und/oder Temperatur ($T_1$) des Testobjektes (UUT) momentan und/oder prädiktiv ermittelt und in Abhängigkeit der momentanen und/oder prädiktiven Wärmeentwicklung (Q) des Testobjektes (UUT) die Wärmesenke (8a) oder eine Wärmequelle (8b) regelt oder steuert.

9. Konditioniereinrichtung (5) nach Anspruch 8, **dadurch gekennzeichnet, dass** die Steuereinheit (7) mit einer Prüfstandsteuerung oder einer Schnittstelle des Testobjektes (UUT) verbunden ist, um zumindest einen Betriebsmesswert des Testobjektes (UUT) aus der Gruppe Leistung, Drehzahl, Energiezufuhr, und/oder Testobjekttemperatur zu empfangen.

10. Konditioniereinrichtung (5) nach Anspruch 8 oder 9, wobei das Testobjekt (UUT) nach einem sich zeitlich ändernden Testzyklus betreibbar ist, **dadurch gekennzeichnet, dass** die Steuereinheit (7) einen Datenspeicher aufweist oder mit einem Datenspeicher (11) verbunden ist, in welchem Informationen über den zeitlichen Verlauf des Testzyklus abgelegt sind.

11. Konditioniereinrichtung (5) nach einem der Ansprüche 8 bis 10, **dadurch gekennzeichnet, dass** die Wärmesenke (8a) als physikalische Wärmesenke ausgebildet ist und ein definiertes Volumen für ein Wärmeträgermedium aufweist, wobei das Wärmträgermedium zwischen dem Testobjekt (UUT) und der Wärmesenke (8a) direkt austauschbar ist.

12. Konditioniereinrichtung (5) nach einem der Ansprüche 8 bis 11, **dadurch gekennzeichnet, dass** die Wärmequelle (8b) als physikalische Wärmequelle ausgebildet ist und ein definiertes Volumen für ein Wärmeträgermedium aufweist, wobei das Wärmträgermedium zwischen dem Testobjekt (UUT) und der Wärmequelle (8b) direkt austauschbar ist.

13. Konditioniereinrichtung (5) nach Anspruch 11 oder 12, **dadurch gekennzeichnet, dass** das definierte Volumen durch einen zumindest eine - vorzugsweise drehzahlregelbare - Fördereinrichtung (13; 131, 132) aufweisenden Kühlkreislauf (12) gebildet ist, welcher über Zu- und Abfuhrströmungswege (16, 17) mit dem Testobjekt (UUT) (UUT) strömungsverbunden oder strömungsverbindbar ist.

14. Konditioniereinrichtung (5) nach Anspruch 13, **dadurch gekennzeichnet, dass** stromabwärts zumindest einer Fördereinrichtung (13; 131, 132) zumindest ein Wärmetauscher (15; 151, 152) angeordnet ist, wobei vorzugsweise stromabwärts einer ersten Fördereinrichtung (131) ein erster Wärmetauscher (151) angeordnet ist.

**15.** Konditioniereinrichtung (5) nach Anspruch 13 oder 14, **dadurch gekennzeichnet, dass** der Kühlkreislauf (12) einen vorzugsweise über ein Bypassventil (14) regulierbaren Bypass-Strömungsweg (12a) aufweist, mit welchem die Strömungsverbindung zum Testobjekt (UUT) variierbar ist.

**16.** Konditioniereinrichtung (5) nach einem der Anspruch 13 bis 15, **dadurch gekennzeichnet, dass** der Kühlkreislauf (12), einen Primärkreis (121) mit einer ersten Fördereinrichtung (131) und einen Sekundärkreis (122) mit einer zweiten Fördereinrichtung (132) aufweist, wobei der Sekundärkreis (122) in einem stromabwärts der ersten Fördereinrichtung (131) angeordneten ersten Knotenpunkt (K1) vom Primärkreis (121) abzweigt und in einem stromabwärts des ersten Knotenpunktes (K1) des Primärkreises (121) angeordneten zweiten Knotenpunkt (K2) in den Primärkreis (121) mündet, wobei vorzugsweise die zweite Fördereinrichtung (132) drehzahlregelbar ist.

**17.** Konditioniereinrichtung (5) nach Anspruch 16, **dadurch gekennzeichnet, dass** der Kühlkreislauf (12) zwischen dem ersten Knotenpunkt (K1) und dem zweiten Knotenpunkt (K2) des Primärkreises (121) einerseits und des Sekundärkreises (122) andererseits ventillos ausgeführt ist.

**18.** Konditioniereinrichtung (5) nach Anspruch 16 oder 17, **dadurch gekennzeichnet, dass** stromabwärts oder stromaufwärts der zweiten Fördereinrichtung ein zweiter Wärmetauscher angeordnet ist.

**19.** Konditioniereinrichtung (5) nach einem der Ansprüche 13 bis 18, **dadurch gekennzeichnet, dass** zumindest eine Fördereinrichtung (13; 131, 132), vorzugsweise die zweite Fördereinrichtung (132), als Verdrängermaschine, vorzugsweise als Zahnradpumpe, ausgebildet ist.

**20.** Konditioniereinrichtung (5) nach einem der Ansprüche 8 bis 19, **dadurch gekennzeichnet, dass** die Steuereinheit (7) zumindest ein zweites Simulationsmodell (90) zum Bestimmen der Totzeiten der Konditioniereinrichtung (5) und/oder Regel-/Steuerungsparameter der Konditioniereinrichtung (5) zur Durchführung einer prädiktiven Steuerung/Regelung aufweist.

**Claims**

**1.** Method for regulating or controlling the thermal conditions on a test stand (4) for at least one heat-emitting or cold-emitting unit under test (UUT), and/or for regulating or controlling the thermal conditions of the unit under test (UUT), in particular of at least one heat engine, configured for example as an internal combustion engine, and/or of at least one electric machine, wherein, in order to maintain a predefined setpoint temperature ($T_s$) or a predefined temporal evolution of the setpoint temperature ($T_s$), a heat transfer medium is conducted between the unit under test (UUT) and a heat sink (8a) or heat source (8b) of a conditioning device (5), **characterised in that** the heat development (Q) and/or temperature of the unit under test (UUT) is determined instantaneously and/or predictively by means of at least one first simulation model (9) and the heat sink (8a) or a heat source (8b) is regulated or controlled as a function of the instantaneous and/or predictive heat development (Q) of the unit under test (UUT).

**2.** Method according to claim 1, **characterised in that** the first simulation model (9) comprises a - preferably semi-empirical - thermal model of the unit under test (UUT), wherein the instantaneous and/or predictive determination of the heat development (Q) of the unit under test (UUT) takes place on the basis of at least one input variable by means of the thermal model.

**3.** Method according to claim 1 or 2, **characterised in that** at least one measured operating value of the unit under test (UUT) from the group consisting of power, speed, energy supply and/or unit temperature is fed to the first simulation model (9) as input variables.

**4.** Method according to one of claims 1 to 3, wherein the unit under test (3) is operated according to a test cycle which varies over time, **characterised in that** information about the temporal evolution of the test cycle is fed to the first simulation model (9) as an input variable.

**5.** Method according to one of claims 1 to 4, **characterised in that,** in order to regulate or control the thermal conditions, a heat transfer medium is exchanged directly between the unit under test (UUT) and a defined cooling volume of the heat sink (8a) or of the heat source (8b).

**6.** Method according to one of claims 1 to 5, **characterised in that** the conditioning device (5) is mapped in a preferably semi-empirical second simulation model (90).

**7.** Method according to claim 6, **characterised in that,** on the basis of the second simulation model (90), downtimes of the conditioning device (5) and/or regulation/control parameters of the conditioning device (5) are determined in order to carry out a predictive control/regulation.

**8.** Conditioning device (5) for carrying out the method for regulating or controlling the thermal conditions on a test stand (4) for at least one heat-emitting or cold-emitting unit under test (UUT), and/or for regulating or controlling the thermal conditions of the unit under test (UUT), in particular of at least one heat engine, configured for example as an internal combustion engine (3), and/or of at least one electric machine, wherein the conditioning device (5) comprises a control unit (7) and a heat sink (8a) and/or heat source (8b) controlled by said control unit, wherein, in order to maintain a predefined setpoint temperature ($T_s$) or a predefined evolution of the setpoint temperature ($T_s$), a heat transfer medium can be conducted between the unit under test (UUT) and the heat sink (8a) or between the heat source (8b) and the unit under test (UUT), according to one of claims 1 to 7, **characterised in that** the control unit (7) comprises at least one first simulation model (9) comprising a, preferably semi-empirical, thermal model of the unit under test (UUT), which instantaneously and/or predictively determines the heat development (Q) and/or temperature ($T_1$) of the unit under test (UUT) and regulates or controls the heat sink (8a) or a heat source (8b) as a function of the instantaneous and/or predictive heat development (Q) of the unit under test (UUT).

9. Conditioning device (5) according to claim 8, **characterised in that** the control unit (7) is connected to a test stand control system or to an interface of the unit under test (UUT) in order to receive at least one measured operating value of the unit under test (UUT) from the group consisting of power, speed, energy supply and/or temperature of the unit under test.

10. Conditioning device (5) according to claim 8 or 9, wherein the unit under test (UUT) can be operated according to a test cycle which varies over time, **characterised in that** the control unit (7) comprises a data memory or is connected to a data memory (11), in which information about the temporal evolution of the test cycle is stored.

11. Conditioning device (5) according to one of claims 8 to 10, **characterised in that** the heat sink (8a) is configured as a physical heat sink and has a defined volume for a heat transfer medium, wherein the heat transfer medium can be exchanged directly between the unit under test (UUT) and the heat sink (8a).

12. Conditioning device (5) according to one of claims 8 to 11, **characterised in that** the heat source (8b) is configured as a physical heat source and has a defined volume for a heat transfer medium, wherein the heat transfer medium can be exchanged directly between the unit under test (UUT) and the heat source (8b).

13. Conditioning device (5) according to claim 11 or 12, **characterised in that** the defined volume is formed by a cooling circuit (12) which has at least one - preferably speed-adjustable - conveying device (13; 131, 132) and which is or can be flow-connected to the unit under test (UUT) (UUT) via supply and discharge flow paths (16, 17).

14. Conditioning device (5) according to claim 13, **characterised in that** at least one heat exchanger (15; 151, 152) is arranged downstream of at least one conveying device (13; 131, 132), wherein preferably a first heat exchanger (151) is arranged downstream of a first conveying device (131).

15. Conditioning device (5) according to claim 13 or 14, **characterised in that** the cooling circuit (12) has a bypass flow path (12a) which can preferably be controlled via a bypass valve (14) and by which the flow connection to the unit under test (UUT) can be varied.

16. Conditioning device (5) according to one of claim 13 to 15, **characterised in that** the cooling circuit (12) comprises a primary circuit (121) with a first conveying device (131) and a secondary circuit (122) with a second conveying device (132), wherein the secondary circuit (122) branches off from the primary circuit (121) at a first node point (K1) arranged downstream of the first conveying device (131) and opens into the primary circuit (121) at a second node point (K2) arranged downstream of the first node point (K1) of the primary circuit (121), wherein preferably the second conveying device (132) is speed-adjustable.

17. Conditioning device (5) according to claim 16, **characterised in that** the cooling circuit (12) is configured in a valveless manner between the first node point (K1) and the second node point (K2) of the primary circuit (121) on the one hand and of the secondary circuit (122) on the other hand.

18. Conditioning device (5) according to claim 16 or 17, **characterised in that** a second heat exchanger is arranged downstream or upstream of the second conveying device.

19. Conditioning device (5) according to one of claims 13 to 18, **characterised in that** at least one conveying device (13; 131, 132), preferably the second conveying device (132), is configured as a positive displacement machine, preferably as a gear pump.

20. Conditioning device (5) according to one of claims 8 to 19, **characterised in that** the control unit (7) comprises at least one second simulation model (90) for determining the downtimes of the conditioning device (5) and/or regulation/control parameters of the conditioning device (5) in order to carry out a predictive control/regulation.

## Revendications

1. Procédé de régulation ou de commande des conditions thermiques sur un banc d'essai (4) destiné à au moins un objet de test (UUT), dégageant de la chaleur ou du froid et/ou pour réguler ou commander les conditions thermiques de l'objet de test (UUT), en particulier d'au moins un moteur thermique réalisé par exemple sous la forme d'un moteur à combustion interne et/ou d'au moins un moteur électrique, selon lequel, pour maintenir une température de consigne ($T_s$) prédéfinie ou une évolution dans le temps prédéfinie de la température de consigne ($T_s$), un fluide caloporteur est transféré entre l'objet de test (UUT) et un puits de chaleur (8a) ou une source de chaleur (8b) d'un dispositif de conditionnement (5),
**caractérisé en ce que**
le dégagement de chaleur (Q) et/ou la température de l'objet de test (UUT) est(sont) déterminée(s) au moyen d'au moins un premier modèle de simulation (9), actuellement et/ou de façon prédictive, et le puits de chaleur (8a) ou une source de chaleur (8b) est réglé ou commandée en fonction du dégagement de chaleur (Q) de l'objet de test (UUT) actuel et/ou prédictif.

2. Procédé conforme à la revendication 1,
**caractérisé en ce que**
le premier modèle de simulation (9) comporte un modèle thermique de préférence semi empirique de l'objet de test (UUT) et la détermination actuelle et/ou prédictive du dégagement de chaleur (Q) de l'objet de test (UUT) est effectuée sur le fondement d'au moins une grandeur d'entrée, au moyen du modèle thermique.

3. Procédé conforme à la revendication 1 ou 2,
**caractérisé en ce qu'**
on fournit au premier modèle de simulation (9) en tant que grandeur d'entrée au moins une valeur de mesure de fonctionnement de l'objet de test (UUT) choisie dans le groupe formé par la puissance, la vitesse de rotation, l'alimentation en énergie et/ou la température de cet objet.

4. Procédé conforme à l'une des revendications 1 à 3, selon lequel l'objet de test (3) est actionné selon un cycle de test variable dans le temps,
**caractérisé en ce qu'**
on fournit au premier modèle de simulation (9) en tant que grandeur d'entrée des informations concernant le déroulement dans le temps du cycle de test.

5. Procédé conforme à l'une des revendications 1 à 4,
**caractérisé en ce que**
pour permettre de régler ou de commander les conditions thermiques, un fluide caloporteur est échangé directement entre l'objet de test (UUT) et un volume de refroidissement défini du puits de chaleur (8a) ou de la source de chaleur (8b).

6. Procédé conforme à l'une des revendications 1 à 5,
**caractérisé en ce que**
le dispositif de conditionnement (5) est représenté dans un second modèle de simulation (90) de préférence semi empirique.

7. Procédé conforme à la revendication 6,
**caractérisé en ce que**
sur le fondement du second modèle de simulation (90) on détermine des temps morts du dispositif de conditionnement (5) et/ou des paramètres de régulation/commande du dispositif de conditionnement (5) pour permettre la mise en oeuvre d'une commande/régulation prédictive.

8. Dispositif de conditionnement (5) permettant la mise en oeuvre du procédé de régulation ou de commande conforme à l'une des revendications 1 à 7, des conditions thermiques sur un banc d'essai (4) destiné à au moins un objet de test (UUT) dégageant de la chaleur ou du froid, et/ou pour permettre la régulation ou la commande des conditions thermiques de l'objet de test (UUT), en particulier d'au moins un moteur thermique réalisé par exemple sous la forme d'un moteur à combustion interne (3) et/ou d'au moins un moteur électrique, le dispositif de conditionnement (5) comprenant une unité de commande (7) et un puits de chaleur (8a) et/ou une source de chaleur (8b) commandé(es) par celle-ci, dans lequel pour permettre de maintenir une température de consigne ($T_s$) prédéfinie ou une évolution prédéfinie de la température de consigne ($T_s$), un fluide caloporteur peut être transféré entre l'objet de test (UUT) et le puits de chaleur (8a) ou entre la source de chaleur (8b) et l'objet de test (UUT), **caractérisé en ce que**
l'unité de commande (7) comporte au moins un premier modèle de simulation (9) comprenant un modèle de chaleur de préférence semi-empirique de l'objet de test (UUT) qui détermine actuellement et/ou de façon prédictive le dégagement de chaleur (Q) et/ou la température ($T_1$) de l'objet de test (UUT), et en fonction du dégagement de chaleur (Q) actuel ou prédictif de l'objet de test (UUT) règle ou commande le puits de chaleur (8a) ou une source de chaleur (8b).

9. Dispositif de conditionnement (5) conforme à la revendication 8,
**caractérisé en ce que**

l'unité de commande (7) est reliée à une commande du banc d'essai ou à une interface de l'objet de test (UUT) pour recevoir au moins une valeur de mesure de fonctionnement de l'objet de test (UUT) du groupe formé par la puissance, la vitesse de rotation, l'alimentation en énergie et/ou la température de cet objet de test.

**10.** Dispositif de conditionnement (5) conforme à la revendication 8 ou 9,
dans lequel l'objet de test (UUT) peut être actionné conformément à un cycle de tests variant dans le temps **caractérisé en ce que** l'unité de commande (7) comporte une mémoire de données ou est reliée à une mémoire de données (11) dans laquelle sont déposées des informations concernant le déroulement dans le temps du cycle de test.

**11.** Dispositif de conditionnement (5) conforme à l'une des revendications 8 à 10,
**caractérisé en ce que**
le puits de chaleur (8a) est réalisé sus la forme d'un puits de chaleur physique, et comporte un volume défini pour un fluide caloporteur, le fluide caloporteur pouvant être directement échangé entre l'objet de test (UUT) et le puits de chaleur (8a).

**12.** Dispositif de conditionnement (5) conforme à l'une des revendications 8 à 11,
**caractérisé en ce que**
la source de chaleur (8b) est réalisée sous la forme d'une source de chaleur physique, et comporte un volume défini pour un fluide caloporteur, le fluide de caloporteur pouvant directement être échangé entre l'objet de test (UUT) et la source de chaleur (8b).

**13.** Dispositif de conditionnement (5) conforme à la revendication 11 ou 12,
**caractérisé en ce que**
le volume défini est formé par un circuit de refroidissement (12) comportant au moins un dispositif de refoulement (13, 131, 132) de préférence dont le vitesse de rotation est réglable et qui est relié fluidiquement ou peut être relié fluidiquement avec l'objet de test (UUT) par l'intermédiaire de voies de circulation d'entrée et de sortie (16, 17).

**14.** Dispositif de conditionnement (5) conforme à la revendication 13,
**caractérisé en ce qu'**
au moins un échangeur de chaleur (15, 151, 152) est monté en aval un dispositif de refoulement (13, 131, 132) et de préférence un premier échangeur de chaleur (151) est monté en aval d'un premier dispositif de refoulement (131).

**15.** Dispositif de conditionnement (5) conforme à la revendication 13 ou 14,

**caractérisé en ce que**
le circuit de refroidissement (12) comporte une voie de circulation de dérivation (12a) de préférence pouvant être régulée par une soupape de dérivation (14), et permettant de faire varier la liaison fluidique avec l'objet de test (UUT).

**16.** Dispositif de conditionnement (5) conforme à l'une des revendications 13 à 15,
**caractérisé en ce que**
le circuit de refroidissement (12) comporte un circuit primaire (121) ayant un premier dispositif de refoulement (131) et un circuit secondaire (122) ayant un second dispositif de refoulement (132), et le circuit secondaire (122) est branché sur le circuit primaire (121) au niveau d'un premier point de noeud (K1) situé en aval du premier dispositif de refoulement (131), et débouche dans le circuit primaire au niveau d'un second point de noeud (K2) situé en aval du premier point de noeud (K1) du circuit primaire (121), et, de préférence, la vitesse de rotation du second dispositif de refoulement (132) peut être réglée.

**17.** Dispositif de conditionnement (5) conforme à la revendication 16,
**caractérisé en ce que**
le circuit de refroidissement (12) est réalisé sans soupape entre le premier point de noeud (K1) et le second point de noeud (K2) du circuit primaire (121) d'une part et du circuit secondaire (122) d'autre part.

**18.** Dispositif de conditionnement (5) conforme à la revendication 16 ou 17,
**caractérisé en ce qu'**
un second échangeur de chaleur est monté en aval ou en amont du premier dispositif de refoulement.

**19.** Dispositif de conditionnement (5) conforme à l'une des revendications 13 à 18,
**caractérisé en ce qu'**
au moins un dispositif de refoulement (13, 131, 132) et de préférence le second dispositif d'alimentation (132) est réalisé sous la forme d'une machine volumétrique de préférence sous la forme d'une pompe à engrenages.

**20.** Dispositif de conditionnement (5) conforme à l'une des revendications 8 à 19,
**caractérisé en ce que** l'unité de commande (7) comporte au moins un second modèle de simulation (90) pour permettre de déterminer les temps morts du dispositif de conditionnement (5) et/ou les paramètre de régulation/commande du dispositif de conditionnement (5) de façon à permettre la mise en oeuvre d'une commande/régulation prédictive.

EP 3 293 504 B1

Fig.1

Fig.2

Fig.3

**Fig.4**

**Fig.5**

Fig.6

Fig.7

Fig.8

Fig.9

Fig.10

Fig.11

Fig.12

**EP 3 293 504 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2008128809 B
- US 2009266525 A
- DE 102013100099

- WO 2004063600 A
- DE 102004033394 B3